# EUROPÄISCHE PATENTSCHRIFT

(11) **EP 1 605 093 B1**
(45) Veröffentlichungstag und Bekanntmachung des Hinweises auf die Patenterteilung: **11.03.2009**
(21) Anmeldenummer: 05010370.4
(22) Anmeldetag: 12.05.2005
(51) Int. Cl.: D06H 5/00, E04F 10/02

(54) **Markisenbahn mit Dehnungsbegrenzung**
Awning web with restricted elongation
Toile de store ayant un allongement limité

(30) Priorität: 11.06.2004 DE 102004028536
(43) Veröffentlichungstag der Anmeldung: 14.12.2005
(73) Patentinhaber: MHZ HACHTEL GmbH & Co. KG, D-70771 Leinfelden-Echterdingen (DE)
(72) Erfinder:
(74) Vertreter: Rüger, Barthelt & Abel Patentanwälte

(56) Entgegenhaltungen:
- EP-A- 0 879 915
- DE-A1- 4 019 434
- DE-B3- 10 306 518
- DE-C1- 10 214 628
- GB-A- 262 681
- US-A- 3 390 038
- US-A- 4 551 375

## Beschreibung

In der DE 102 14 628 A1 ist eine Markisenbahn beschrieben, die sich aus mehreren einzelnen Teilbahnen zusammensetzt. Die Teilbahnen verlaufen auf Stoß nebeneinander. Die Stoßstelle zwischen den Teilbahnen ist mit Hilfe eines Verbindungsbandes, das den Stoß überbrückt, miteinander stoffschlüssig überbrückt. Das Verbindungsband besteht aus einem Gewebe, das mit Hilfe eines Schmelzklebers mit den beiden Teilbahnen verklebt ist.

Bei dieser bekannten Anordnung soll das Gewebe des Verbindungsbands sehr offen gewebt sein, damit es optisch möglichst wenig in Erscheinung tritt und auch beim Aufwickeln der Markisenbahn keine allzu starke Verdickung verursacht.

Das Verbindungsband hat keinen Einfluss auf die Dehnfähigkeit der am Stoß liegenden Kanten.

Aus dem allgemeinen Stand Technik ist es ferner bekannt, die einzelnen Teilbahnen an der Fügestelle überlappend anzuordnen und an der Überlappungsstelle zu verkleben oder zu vernähen.

Alle diese Markisenbahnen zeigen in der Praxis ein gewisses Dehnungsverhalten, insbesondere auch an den Rändern der Markisenbahnen, was schlussendlich zu einem mehr oder weniger welligen Verlauf der ausgefahrenen Markisenbahn führt. Außerdem ändert sich die Länge der Bahn, was zu Schwierigkeiten bei der Endabschaltung der Markise führt, weil die Markisenbahn im Laufe der Zeit quasi ausleiert.

Andere Arten, zwei Markisenbahnen miteinander zu verbinden, sind aus der DE 196 02 575 A1 bekannt.

Die beiden Tuchbahnen werden längs einem Streifen, der parallel zu der zu verbindenden Stoßkante liegt, auf beiden Seiten mit einer Schmelzkleberschicht versehen. Die Tuchbahnen werden mit einem stumpfen Stoß nebeneinander gelegt. Auf die Schmelzkleberschicht wird ein Verbindungsband aufgelegt, das den Stoß überbrückt und das sich aus einer Trägerfolie und auf der Trägerfolie befestigten Fasern zusammensetzt. Die Fasern verlaufen in Richtung quer zum Stoß und sind in der Längsrichtung des Bandes miteinander nicht verbunden.

Nach dem Verschweißen der Fasern mit der Schmelzklebeschicht wird die Trägerfolie abgezogen. Dieses Verbindungsverfahren wird auf beiden Seiten der Tuchbahn vorgenommen.

Da die Verbindungsfasern lediglich quer zum Stoß liegen, ändert sich an der Festigkeit in Längsrichtung nichts.

Darüber hinaus ist die außen liegende Schmelzkleberschicht nicht geschützt. Die bisher üblichen Schmelzkleber werden durch UV-Einwirkung zerstört.

Bei einer anderen Ausführungsform, die in der oben genannten Druckschrift beschrieben ist, werden Randbereiche, die neben dem zu verbindenden Stoß liegen, durch Wärmeeinwirkung in der Dicke vermindert. Hierdurch entsteht parallel zum Stoß eine Stufe, in die die komplementär verformte Tuchbahn eingelegt wird. Wiederum durch Aufbringen von Klebstoff auf der Außenseite werden sodann die aufeinander liegenden Bereiche miteinander unter Verwendung von Fasern verbunden. Die Fasern liegen quer zum Stoß.

Bei einer dritten Variante werden im Überlappungsbereich zuvor die Kettfäden entfernt, wodurch eine Verringerung der Materialstärke neben dem Stoß erhalten wird.

Auch hier liegen die Kleberschichten außen und werden durch UV-Licht zerstört.

Ausgehend hiervon ist es Aufgabe der Erfindung eine Markisenbahn zu schaffen, bei der die Dehnung in Längsrichtung dauerhaft vermindert ist.

Diese Aufgabe wird mit einer Tuch- oder Folienbahn mit den Merkmalen der Ansprüche 1 oder 20 gelöst.

Die neue Folienbahn setzt sich aus wenigstens zwei Teilbahnen zusammen. Die beiden Teilbahnen sind mit ihren Stoßkanten aneinander gelegt, und zwar nicht überlappend. Der Stoß ist ein stumpfer Stoß, der Stoßkanten keine Materialverdickung aufgrund der Teilbahnen ergibt.

Der stumpfe Stoß wird mit Hilfe eines Verbindungsbands überbrückt, das stoffschlüssig mit den beiden Teilbahnen verbunden ist. Dieses Verbindungsband enthält wenigstens eine erste Art von Fasern, die weniger dehnbar sind als das Material der Teilbahnen. Dadurch wird verhindert, dass im Bereich des Stoßes die Teilbahnen in Längsrichtung des Stoßes und damit in Längsrichtung der Aus- und Einfahrbewegung gedehnt werden können.

Die Dehnungsbegrenzung wird auf diese Weise unmittelbar durch das Verbinden der Teilbahnen erhalten, ohne dass zusätzliche Maßnahmen, die über das Verbinden der Teilbahnen hinausgehen, erforderlich sind.

Das Verbindungsband ist mit einem UV-Schutz versehen, um ein Vergilben oder Zerstören zu vermeiden, insbesondere dann, wenn das Verbindungs- oder das Verstärkungsband auf der der Sonne bzw. der UV-Lichtquelle zugekehrten Seite verwendet wird.

Weiterhin kann bei der neuen Tuch- und Folienbahn ein freier Rand durch ein Verstärkungsband in seiner Dehnfähigkeit begrenzt werden, indem dort ein Verstärkungsband verwendet wird, das stoffschlüssig verbunden ist und das Fasern der ersten Art enthält, die weniger dehnbar sind, als das Material der Teilbahnen.

Wenn bei einer Markisenbahn beide Maßnahmen ergriffen werden, tritt eine Verriegelung der Dehnfähigkeit sowohl im mittleren Bereich, als auch im Randbereich auf. Die Ränder können nicht schlaff werden und die Markisenbahn behält die gewünschte Länge, so dass es nicht zu Störungen bei der Endabschaltung kommen kann. Außerdem wird ein schlaffes Durchhängen vom Rand, weil der Rand ausgeleiert ist, vermieden.

Die erste Art von Fasern können Kunststoff- oder Mineralfasern sein. Mineralfasern haben den Vorteil von vorne herein beständig gegen UV-Licht zu sein und weniger zu altern. Dafür sind sie etwas empfindlicher hinsichtlich der Bruchfestigkeit. Diese Eigenschaft spielt beim stoffschlüssigen Verbinden, beispielsweise durch Heißklebewalzen oder durch die Ultraschallsonotroden eine Rolle, wenn diese hierzu verwendet werden.

Gleichwohl sind Glasfasern sehr gut geeignet. Diese können auch bei geringem Faserdurchmesser extrem hohe Kräfte aufnehmen.

Die Fasern sind vorzugsweise Monofilamente oder sie setzen sich aus Monofilamenten zusammen.

Eine besonders gute Dehnungsbegrenzung wird erhalten, wenn die Fasern der ersten Art lediglich in Längsrichtung des Stoßes bzw. der zu sichernden Kante verlaufen.

Die ersten Fasern können innerhalb des Verbindungsbandes ein Gewebe bilden, wobei eine leicht zu handhabende Struktur entsteht. Je nachdem welche Faserart verwendet wird, kann das Verbindungsband, auch wenn es als Gewebe ausgeführt ist, unter Umständen nur Fasern der ersten Art enthalten.

Bei Verwendung von Glasfasern ist es problematisch, sich überkreuzende Fasern, beispielsweise für Kette und Schuss, zu verwenden, die beide aus Glas bestehen. Es zeigt sich, dass an den Überkreuzungspunkten die Gefahr des Faserbruches in Folge der Schweißwerkzeuge sehr hoch ist, womit das Verbindungsband in Querrichtung seine Festigkeit weitgehend verliert.

Es ist deswegen zweckmäßig, wenn das Verbindungsband zusätzlich eine zweite Art von Fasern enthält, die in Querrichtung des Stoßes verlaufen und die sich hinsichtlich der mechanischen Eigenschaften von den Fasern der ersten Art unterscheiden. Bevorzugt unterscheiden sich die Fasern hinsichtlich der Bruchfestigkeit.

Abgesehen von der Verwendung eines Gewebes ist es auch denkbar, wenn das Verbindungsband ein Flies enthält. Auch bei einem Flies liegen genügende Faserabschnitte in Längsrichtung der Kante, bzw. des Stoßes, und reduzieren die Dehnfähigkeit der Teilbahnen in Längsrichtung.

Die zweite Art von Fasern können Kunststofffasern sein, auch hier wiederum bevorzugt Monofilamente.

Zweckmäßigerweise liegen die Fasern der ersten Art in Kettrichtung des Bandes, während die Fasern der zweiten Art in Schussrichtung liegen. Eine einfache Verarbeitung ergibt sich, wenn das Verbindungs- oder Verstärkungsband bereits mit einer Schmelzkleberschicht versehen ist. Die Fasern der ersten Art und, falls vorhanden, die Fasern der zweiten Art, können auf einer Seite der Schmelzkleberschicht vorhanden sein. Es ist aber auch möglich, die Fasern der ersten Art und, falls vorhanden, die Fasern der zweiten Art innerhalb der Schmelzkleberschicht einzubetten, sodass die Fasern auf beiden Seiten von einer Schmelzkleberschicht geschützt sind.

Eine andere Möglichkeit den UV-Schutz herzustellen besteht darin, dass, bezogen auf die Fläche, die von den Fasern der ersten bzw. zweiten Art gebildet wird, auf einer Seite eine Schmelzkleberschicht mit niedriger Schmelztemperatur und auf der anderen Seite eine Schmelzkleberschicht mit höherer Schmelztemperatur vorhanden ist, wobei die Schicht mit der höheren Schmelztemperatur als Rückschicht mit UV-Schutz dient.

Mit dem erfindungsgemäßen Verbindungsband ist es auch möglich, Teilbahnen miteinander zu verbinden, die beispielsweise auf einer Seite mit einer nicht haftfähigen Beschichtung versehen sind. Ein Beispiel für eine solche Beschichtung ist beispielsweise PTFE, besser bekannt unter der Bezeichnung Teflon. Das Verbindungsband wird auf jener Seite eingesetzt, das die Beschichtung nicht trägt.

Im Übrigen sind Weiterbildungen der Erfindung Gegenstand von Unteransprüchen.

In der Zeichnung ist ein Ausführungsbeispiel des Gegenstandes der Erfindung dargestellt. Es zeigen:
- Fig. 1: eine Gelenkarmmarkise als Anwendungsbeispiel für die Erfindung, in einer perspektivischen Darstellung,
- Fig. 2: einen Ausschnitt aus der Markisenbahn der Markise nach Fig. 1 unter Veranschaulichung der Stoßstelle der Teilbahnen in einem vergrößerten Maßstab,
- Fig. 3: einen Ausschnitt aus dem Randbereich der Markisenbahn der Markise nach Fig. 1 unter Veranschaulichung des dort verwendeten Verstärkungsbandes, und
- Fig. 4: ein weiteres Ausführungsbeispiel der Erfindung in Verbindung mit einem Ausschnitt aus der Markisenbahn der Markise nach Fig. 1 unter Veranschaulichung der Stoßstelle der Teilbahnen in einem vergrößerten Maßstab und in einer Ansicht auf die Unterseite.

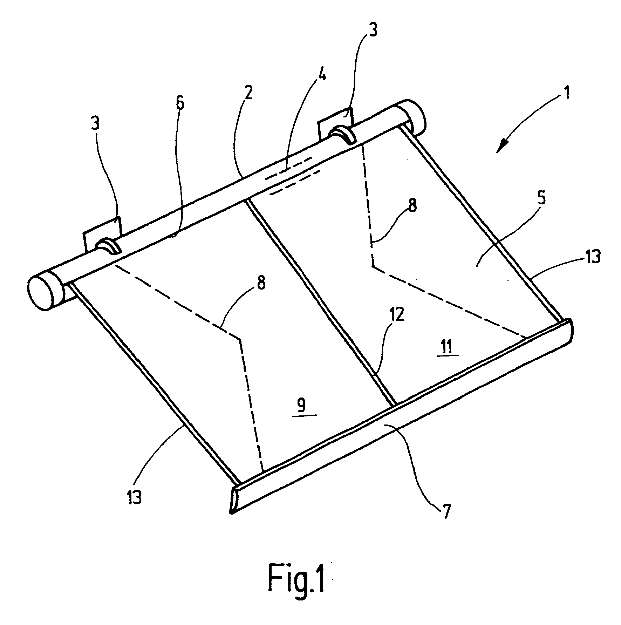

Als möglichen Einsatzbereich der Erfindung ist in Fig. 1 eine Gelenkarmmarkise 1 gezeigt. Zu der Gelenkarmmarkise 1 gehört ein Gehäuse 2, das über Wandhalter 3 an einer nicht weiter veranschaulichten Gebäudefassade befestigt ist. In dem Gehäuse 2 ist drehbar eine gestrichelt angedeutete Wickelwelle 4 drehbar gelagert, an der mit einer Kante eine Markisenbahn 5 befestigt ist. Die Markisenbahn 5 läuft über einen Tuchschlitz 6 aus dem Gehäuse 2 heraus. Ihre von der Wickelwelle 4 abliegende Kante ist an einer Fallschiene 7 befestigt. Die Fallschiene 7 wird in bekannter Weise von zwei Gelenkarmen 8 getragen, die in der Fig. 1 gestrichelt angedeutet sind. Die Gelenkarme 8 sind unterhalb des Gehäuses 2 an den Wandhaltern 3 anscharniert.

Die Markisenbahn 5 setzt sich aus zwei Teilbahnen 9 und 11 zusammen. Die beiden Teilbahnen 9 und 11 sind an einer Füge- oder Stoßstelle 12 miteinander verbunden. Die Füge- oder Stoßstelle 12 läuft über die gesamte Länge der Markisenbahn 5 von der Wickelwelle 4 bis zu der Fallschiene 7 durch.

Die beiden außen liegenden Längskanten der Markisenbahn 5 sind durch Verstärkungsstreifen 13 verstärkt.

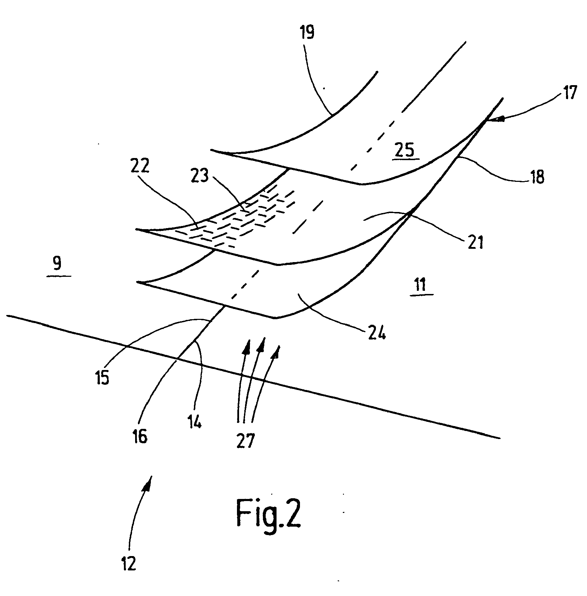

Der Aufbau der Stoßstelle 12 ist vergrößert in Fig. 2 veranschaulicht.

Die beiden Teilbahnen 9 und 11 bestehen jeweils aus einem gewebten Markisenstoff, der gegebenenfalls mit einer farbigen Bedruckung versehen ist. Jede der beiden Teilbahnen endet im Bereich der Stoßstelle 12 an einer Längskante 14 bzw. 15. Die Längskanten 14 und 15 sind gerade Kanten. Die beiden Kanten 14 und 15 liegen so dicht wie möglich beieinander, wodurch sich ein stumpfer Stoß 16 ergibt. Auf keinen Fall liegen die beiden Teilbahnen 9 und 11 im Bereich der Stoßstelle 12 einander überlappend.

In Folge des stumpfen Stoßes wird eine Materialverdickung im Bereich der Stoßstelle 12 verhindert. Die beiden Längskanten 14 und 15, die geschnittene oder gewebte Kanten sein können, werden durch ein Verbindungsband 17 aneinander festgehalten. Das Verbindungsband 17 wirkt außerdem als Band zur Begrenzung der Dehnung der Markisenbahn 5 in Längsrichtung. Das Verbindungsband 17 wird von zwei zueinander parallelen Kanten 18 und 19 begrenzt. Diese Kanten 18 und 19 verlaufen parallel zum Stoß 14, und zwar zweckmäßigerweise so, dass der Stoß 16 mittig zwischen den Kanten 18 und 19 liegt.

Das Verbindungsband 17 enthält ein Gewebeband 21, in dem Kettfäden 22 und Schussfäden 23 in Leinbandbindung miteinander verwoben sind. Die Ränder oder Längskanten des Gewebebandes 21 können Webkanten oder Schnittkanten sein.

Die Kettfäden 22 laufen parallel zu den Begrenzungsrändern 18 und 19 und damit parallel zu dem Stoß 16. Dies bedeutet wiederum, dass die Kettfäden 22 in Längsrichtung der Markisenbahn 5 sich zwischen der Wickelwelle 4 und der Fallschiene 7 erstrecken. In dieser Richtung wirkt auf die Markisenbahn 5 die größte Zugbelastung, hervorgerufen durch die Streckkraft der Faltarme 8, die in der üblichen Weise ausgeführt sind.

Damit die Kettfäden 22 das Gewebe bzw. das Material der Teilbahnen 9 und 11 im Bereich der Stoßstelle 12 gegen Dehnung in der besagten Längsrichtung schützen, wird für die Kettfäden 22 ein Material verwendet, das verhältnismäßig undehnbar ist. Als Material kommen hierfür Glasfasern, vorzugsweise als Monofilamente oder andere, feste mineralische Fasern in Frage. Anstelle von mineralischen Fasern können auch Kunstfasern verwendet werden, beispielsweise Kevlar, PP-Faser oder ähnliches.

Die Schussfäden 23 dagegen liegen quer zu dem Stoß 16. Sie brauchen lediglich jene Kraft aufzunehmen, die bestrebt ist, die beiden Teilbahnen 9 und 11 im Bereich der Stoßstelle voneinander zu separieren. Diese Kraft ist signifikant kleiner. Es genügt deswegen, wenn für die Schussfäden 23 Kunststofffäden eingesetzt werden, die verhältnismäßig flexibel sind.

Durch die unterschiedliche Wahl der Materialien für die Kettfäden 22 und die Schussfäden 23 wird verhindert, dass beim Aufbringen des Verbindungsbandes 17 entweder die Kettfäden 22 oder die Schussfäden 23 an den Kreuzungspunkten durchgetrennt werden.

Das Gewebeband 21 ist auf den beiden Teilbahnen 9 und 11, mit Hilfe einer Schmelzkleberschicht 24, stoffschlüssig festgehalten. Die Schmelzkleberschicht 24 kann bereits mit dem Gewebeband 21 vor dem Aufbringen auf die Markisenbahn 5 stoffschlüssig verbunden sein. Der Begriff Schmelzkleberschicht soll hier auch themoaktivierbare Folien oder Heißsiegelfolien mit umfassen

Eine weitere bandförmige Schicht 25, beispielsweise ebenfalls aus einer Art Schmelzkleber, befindet sich auf der von der Markisenbahn 5 abliegenden Seite des Gewebebandes 21. Die Funktion dieser Schicht 25 besteht darin, das Gewebeband 21 sowie die Schmelzkleberschicht 24 gegen UV-Strahlen und die daraus resultierende negativen Folgen wie Farbveränderung und Beeinträchtigung der mechanischen Festigkeit.

Die bandförmige Schicht 25 kann, wie bereits zuvor in Verbindung mit der Schmelzkleberschicht 24 erwähnt, stoffschlüssiger Bestandteil des Verbindungsbandes 17 vor dem Aufbringen auf der Markisenbahn 5 sein.

Um das Verbindungsband 17 herzustellen, kann durch Kalandrieren das in großer Breite erzeugte Gewebe aus den Kett- und Schussfäden 22, 23 auf beiden Flachseiten einerseits mit der Schmelzkleberschicht 24 und andererseits mit der Schutzschicht 25 versehen werden. Beide Schichten haften in Folge des Kalandrierens stoffschlüssig an dem dazwischen liegenden Gewebe. Anschließend wird die so erhaltene Rolle aus dreilagigem Material in die entsprechende Breite des Verbindungsbandes 17 geschnitten und zu Rollen aufgewickelt.

Die Markisenbahn 5 wird hergestellt in dem zunächst mit bekanntem Verfahren, wie Laserschneiden, thermisches Schneiden oder Schneiden mit rotierenden Scheren, die Teilbahnen 9 und 11 auf die erforderliche Breite zugeschnitten werden. Sodann werden die Teilbahnen 9 und 11 mit ihren Längskanten 14 und 15 aneinander gelegt, um den gezeigten Stumpfen nicht überlappenden Stoß 16 zu bekommen. Sodann wird in Längsrichtung des Stoßes 16 über diesen das Verbindungsband 17 ausgebreitet unter Aufschmelzen der Schmelzkleberschicht 24 stoffschlüssig mit den beiden Teilbahnen 9 und 11 verbunden. Das Aufschmelzen der Schmelzkleberschicht 24 kann in bekannter Weise mit Hilfe von Ultraschallsonotroden erfolgen, die längs des Verbindungsbandes 17 bewegt werden.

Eine andere Möglichkeit besteht darin, wie durch die Pfeile 27 angedeutet, in den noch offenen Bereich des aufzulegenden Verbindungsbandes 17 und den beiden Teilbahnen 9 und 11 Heißluft einzublasen, um die Schmelzkleberschicht 24 zu erweichen und in den klebfähigen Zustand zu bringen. Sodann wird fortlaufend, nachdem die erforderliche Temperatur erreicht ist, das Verbindungsband einer oder mehrerer Rollen gegen die beiden Teilbahnen 9 und 11 angedrückt.

Schließlich besteht eine Möglichkeit des Aufschmelzens der Schmelzkleberschicht 24 darin, eine beheizte Rolle über die Schutzschicht 25 des Verbindungsbands 17 laufen zu lassen, um die erforderliche Wärme zum Aufschmelzen der Schmelzkleberschicht 24 zuzuführen.

Damit die gewünschte Verarbeitung erreicht werden kann, gelangt die Schmelzkleberschicht 24 in den aufgeschmolzenen klebfähigen Zustand, bei einer Temperatur, die weder die Kett- noch die Schussfäden des Gewebebandes 21, noch die Schutzschicht 25 beeinträchtigt.

Die Schutzschicht 25 kann ebenfalls von einem Schmelzkleber gebildet sein, dessen Schmelztemperatur jedoch deutlich höher als die Schmelztemperatur der Schmelzkleberschicht 24 liegt und der eine gute UV-Beständigkeit und UV-Filterung für die darunter liegenden Bereiche erbringt.

Schlussendlich wird eine Markisenbahn 5 erhalten, die um eine Achse parallel zu dem Stoß 16 sehr flexibel ist, wobei auch bei kleinen Krümmungsradien die gebogenen, belasteteten Schussfäden 23 nicht brechen.

Andererseits ist die Markisenbahn 5 im Bereich des Verbindungsbandes 17 in Längsrichtung des Stoßes 16 praktisch nicht mehr dehnbar, die in dieser Richtung auftretenden Kräfte werden von den Kettfäden 22 aufgenommen, womit in diesem Bereich das Gewebe bzw. das Material der Teilbahnen 9 und 11 von Zugkräften freigehalten ist.

Die Materialstärke des Verbindungsbandes 17 ist so gering, dass hierdurch die Gesamtstärke der Markisenbahn 5 praktisch nicht vergrößert wird. Das Verbindungsband 17 zeigt nach dem Aufbringen und Verschweißen mit den Teilbahnen 9 und 11 eine Materialverstärkung gegenüber dem Werkstoff der Teilbahnen 9 und 11 neben dem Verbindungsband 17 von zwischen 2% und maximal 20%, vorzugsweise um die 15%, der Materialstärke der Markisenbahn 5.

Die Schutzschicht 25 des Verbindungsbands 17 kann auch im Hinblick auf Gleiteigenschaften gewählt werden.

Bei Markisen mit langen Wickelwellen 4 ist es üblich, die Wickelwellen in der Mitte oder in einem mittleren Bereich ein- oder mehrmals zu unterstützen. Die Stützlager haben eine teilkreisförmige Gestalt und auf Ihnen liegt die Wickelwelle 4 und der Zwischenlage des von der Markisenbahn 5 gebildeten Ballens. Das Gleiten an dieser Stelle kann wesentlich verbessert werden, wenn ein entsprechendes Material für die Schutzschicht 25 ausgewählt wird.

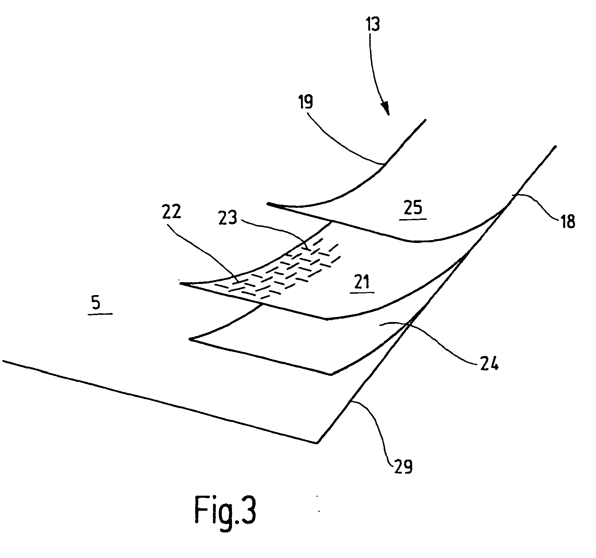

Durch die Verwendung des Verbindungsbandes 17 mit den praktisch undehnbaren Kettfäden 22, ist der mittlere Bereich der Markisenbahn gegen Strecken geschützt. Um auch die Ränder zu schützen ist, wie Fig. 3 zeigt, an den freien Längskante 29 der Markisenbahn 5 das Verstärkungsband 13 aufgebracht. Das Verstärkungsband 13 hat denselben Aufbau wie das Verbindungsband 17, weshalb eine erneute detailierte Beschreibung entbehrlich ist. Die in dem Verstärkungsband 13 auftauchenden Strukturelemente sind mit denselben Bezugszeichen versehen, wie die Strukturelemente des Verbindungsbandes 17 und es geltend die oben gemachten Ausführungen insoweit.

Bei den Ausführungsformen nach den Fig. 2 und 3 befindet sich das Verbindungsband 17 bzw. das Verstärkungsband 13 auf der Oberseite der Markisenbahn 5, d.h. jener Seite, die im ausgefahrenen Zustand der Sonne bzw. der UV-Quelle zugewandt ist. Diese Seite ist außerdem die Wetterseite. Gelegentlich wird es bevorzugt, die Markise 1 nicht nur als Sonnenschutz sondern ganz allgemein als Wetterschutz zu verwenden. In einem solchen Falle muss die Markisenbahn auf der "Wetterseite" über die Fläche mit einer besonderen Beschichtung versehen sein, um das Gewebe der Markisenbahn 5 zu schützen. Eine solche Beschichtung besteht beispielsweise aus PTFE, bekannt auch unter dem Handelsnamen Teflon. Auf einer solchen Beschichtung haftet bekanntlich kein Klebstoff.

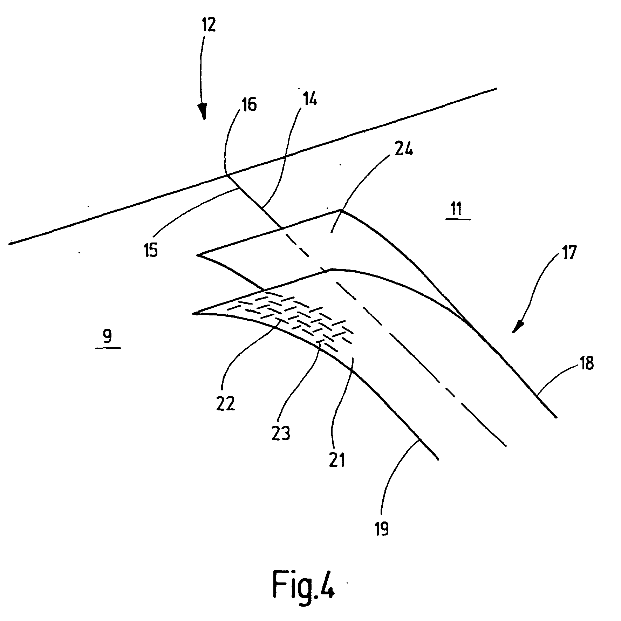

Um die Teilbahnen 9 und 11 dennoch miteinander zu verbinden, wird ein Verbindungsstreifen 17 verwendet, der nicht, wie in Fig. 2 gezeigt, auf der Oberseite, sondern gemäß Fig. 4 auf der Unterseite aufgebracht wird.

In Fig. 4 werden Strukturelemente, die mit den Strukturelementen nach Fig. 2 übereinstimmen, dementsprechend auch mit demselben Bezugszeichen versehen und nicht erneut beschrieben.

Der wesentliche Unterschied zu dem Ausführungsbeispiel nach Fig. 2 besteht, abgesehen von der Anbringung an der nicht beschichteten Unterseite der beiden Markisenbahnen 9 und 11, in dem Wegfall der Schutzschicht 25. Diese wird nicht mehr benötigt, da in jedem Falle der UV-Schutz durch die Teilbahnen 9 und 11 selbst erbracht wird.

Wie Eingangs erwähnt, wurde anhand der Fig. 1 der Einsatz der Erfindung in Verbindung mit einer Gelenkarmmarkise erläutert. Andere Einsatzbereiche sind Senkrechtmarkisen, Gegenzugmarkisen, rollbare Werbeträger, Wintergartenbeschattungen. Mit anderen Worten, all jene Konstruktionen, bei denen es darauf ankommt, das eine Bahn aus einer Anzahl von Teilbahnen zusammengesetzt werden muss, wobei die Dehnfähigkeit in Längsrichtung begrenzt wird.

Dei Erfindung ist in Verbindung mit einer Schmelzkleberschicht erläutert. Es ist jedoch auch möglich das Verstärkungs-/Verbindungsband mittel eines Zweikomponentenkllebers stoffschlüssig zu befestigen.

Ohne die Begrenzung in Dehnfähigkeit würde beispielsweise die Gelenkarmmarkise, je nach den Zustand der Markisenbahn 5, mehr oder weniger weit ausfahren. Bei einer neuen Markisenbahn 5 wäre die Ausfahrlänge deutlich kürzer als bei einer Markisenbahn 5, die bereits längere Zeit im Einsatz ist. Dieser könnte zu Störung bei den Endschaltern der Markise 1 führen. Außerdem würden die ungeschützten Ränder der Markisenbahn 5 im Laufe der Zeit mehr oder weniger stark nach unten hängen, was ein hässliches Aussehen ergibt. Die verwendeten Verstärkungsstreifen 13 verhindern das Ausleiern der Ränder der Markisenbahn 5 und damit das Durchhängen der Ränder gegenüber dem mittleren Bereich.

Eine Markisenbahn ist mit Hilfe von aufgebrachten Steifen gegen Dehnen in Längsrichtung im Bereich der Streifen geschützt. Die Streifen sind so gestaltet, dass sie beim Aufwickeln der üblichen gebrauchten Längen keine nennenswerte Materialverdickung erbringen, die zur Faltenbildung im aufgewickelten Ballen Anlass geben könnten.

## Patentansprüche

1. Tuch- oder Folienbahn (5), insbesondere für Beschattungseinrichtungen (1) oder Werbeträger,
mit einer ersten Teilbahn (9,11), die eine gerade Stoßkante (14,15) aufweist,
mit wenigstens einer zweiten Teilbahn (9,11), die wenigstens eine gerade Stoßkante (14,15) aufweist, die auf Stoß neben der Stoßkante (14,15) der ersten Teilbahn (9,11) verläuft,
mit wenigstens einem Verbindungsband (17), das den Stoß (16) überbrückend mit beiden Teilbahnen (9,11) stoffschlüssig verbunden ist,
wobei das Verbindungsband (17)
- wenigstens eine erste Art Fäden/Fasern enthält, die weniger dehnbar sind als das Material der Teilbahnen (9,11),
- auf einer Flachseite mit einer UV-Schutzschicht (25) und auf der gegenüberliegenden Seite mit einer Schmelzkleberschicht (24) versehen ist, und
- die Fäden/Fasern der ersten Art zwischen der UV-Schutzschicht (25) und der Schmelzkleberschicht (24) enthalten sind, bzw. zum Teil in die eine oder die andere oder in beide Schichten (24,25) eingebettet sind.

2. Tuch- oder Folienbahn nach Anspruch 1, **dadurch gekennzeichnet, dass** die erste Art Fäden/Fasern Kunststoff- oder Mineralfasern sind.

3. Tuch- oder Folienbahn nach Anspruch 1, **dadurch gekennzeichnet, dass** die erste Art Fäden/Fasern Glasfasern sind.

4. Tuch- oder Folienbahn nach Anspruch 1, **dadurch gekennzeichnet, dass** die erste Art Fäden/Fasern lediglich in Längsrichtung des Stoßes (16) liegen.

5. Tuch- oder Folienbahn nach Anspruch 1, **dadurch gekennzeichnet, dass** die erste Art Fäden/Fasern innerhalb des Verbindungsbands (17) ein Gewebe bilden.

6. Tuch- oder Folienbahn nach Anspruch 1, **dadurch gekennzeichnet, dass** das Verbindungsband (17) lediglich die erste Art Fäden/Fasern enthält.

7. Tuch- oder Folienbahn nach Anspruch 1, **dadurch gekennzeichnet, dass** das Verbindungsband (17) zusätzlich eine zweite Art Fäden/Fasern enthält, die sich von der ersten Art Fäden/Fasern hinsichtlich der mechanischen Eigenschaften unterscheiden, und dass die Fäden/Fasern der zweiten Art zwischen der UV-Schutzschicht und der Schmelzkleberschicht enthalten oder eingebettet sind.

8. Tuch- oder Folienbahn nach Anspruch 7, **dadurch gekennzeichnet, dass** sich die Fäden/Fasern der zweiten Art von den Fäden/Fasern der ersten Art hinsichtlich des Bruchverhaltens oder der Knickfestigkeit unterscheiden.

9. Tuch- oder Folienbahn nach Anspruch 1, **dadurch gekennzeichnet, dass** die Fäden/Fasern der ersten Art innerhalb des Verbindungsbands (17) ein Vlies bilden.

10. Tuch- oder Folienbahn nach Anspruch 7, **dadurch gekennzeichnet, dass** die Fäden/Fasern der zweiten Art Kunststofffasern sind.

11. Tuch- oder Folienbahn nach Anspruch 7, **dadurch gekennzeichnet, dass** die Fäden/Fasern der ersten Art mit den Fäden/Fasern der zweiten Art ein Gewebe bilden, wobei die Fäden/Fasern (22) der ersten Art in Kettrichtung liegen.

12. Tuch- oder Folienbahn nach Anspruch 1 oder 7, **dadurch gekennzeichnet, dass** die Fäden/Fasern der ersten Art und, falls vorhanden, die Fäden/Fasern der zweiten Art auf einer Seite der Schmelzkleberschicht (24) vorhanden sind.

13. Tuch- oder Folienbahn nach Anspruch 1 oder 7, **dadurch gekennzeichnet, dass** die Fäden/Fasern der ersten Art und, falls vorhanden, die Fäden/Fasern der zweiten Art in der Schmelzkleberschicht (24) eingebettet sind.

14. Tuch- oder Folienbahn nach Anspruch 1, **dadurch gekennzeichnet, dass** die UV-Schutzschicht (25) von einer Schmelzkleberschicht gebildet ist, die eine höhere Schmelztemperatur als die Schmelzkleberschicht (24) auf der anderen Seite aufweist.

15. Tuch- oder Folienbahn nach Anspruch 1, **dadurch gekennzeichnet, dass** wenigstens eine Teilbahn (9,11) eine Stoff- oder Textilbahn ist.

16. Tuch- oder Folienbahn nach Anspruch 15, **dadurch gekennzeichnet, dass** die Stoffbahn auf lediglich einer Seite mit einer Beschichtung versehen ist.

17. Tuch- oder Folienbahn nach Anspruch 16, **dadurch gekennzeichnet, dass** die Beschichtung eine PTFE-Beschichtung ist.

18. Tuch- oder Folienbahn nach Anspruch 17, **dadurch gekennzeichnet, dass** das Verbindungsband (17) auf jener Seite aufgebracht ist, die keine Beschichtung aufweist.

19. Tuch- oder Folienbahn nach Anspruch 18, **dadurch gekennzeichnet, dass** die Seite mit dem Verbindungsband (17) im Gebrauch die Unterseite oder die der Sonne oder einer UV-Quelle abgewandte Seite bildet.

20. Tuch- oder Folienbahn (5), insbesondere für Beschattungseinrichtungen (1) oder Werbeträger, die seitlich von freien Längskanten begrenzt ist,
mit wenigstens einem Verstärkungsband (13), das längs wenigsten einer Längskante (29) verläuft, das mit der Tuch- oder Folienbahn (5) stoffschlüssig verbunden ist,
wobei das Verstärkungsband (17)
- wenigstens eine erste Art Fäden/Fasern enthält, die weniger dehnbar sind als das Material der Teilbahnen (9,11),
- auf einer Flachseite mit einer UV-Schutzschicht (25) und auf der gegenüberliegenden Seite mit einer Schmelzkleberschicht (24) versehen ist, und
- die Fäden/Fasern der ersten Art zwischen der UV-Schutzschicht (25) und der Schmelzkleberschicht (24) enthalten sind, bzw. zum Teil in die eine oder die andere oder in beide Schichten (24,25) eingebettet sind.

21. Tuch- oder Folienbahn nach Anspruch 20, **dadurch gekennzeichnet, dass** die erste Art Fäden/Fasern Kunststoff- oder Mineralfasern sind.

22. Tuch- oder Folienbahn nach Anspruch 20, **dadurch gekennzeichnet, dass** die erste Art Fäden/Fasern Glasfasern sind.

23. Tuch- oder Folienbahn nach Anspruch 20, **dadurch gekennzeichnet, dass** die erste Art Fäden/Fasern innerhalb des Verstärkungsbands (13) ein Gewebe bilden.

24. Tuch- oder Folienbahn nach Anspruch 20, **dadurch gekennzeichnet, dass** das Verstärkungsband (13) lediglich die erste Art Fäden/Fasern enthält.

25. Tuch- oder Folienbahn nach Anspruch 20, **dadurch gekennzeichnet, dass** das Verstärkungsband (13) zusätzlich eine zweite Art Fäden/Fasern enthält, die sich von der ersten Art Fäden/Fasern hinsichtlich der mechanischen Eigenschaften unterscheiden, und dass die Fäden/Fasern der zweiten Art zwischen der UV-Schutzschicht und der Schmelzkleberschicht enthalten oder eingebettet sind.

26. Tuch- oder Folienbahn nach Anspruch 25, **dadurch gekennzeichnet, dass** sich die Fäden/Fasern der zweiten Art von den Fäden/Fasern der ersten Art hinsichtlich des Bruchverhaltens unterscheiden.

27. Tuch- oder Folienbahn nach Anspruch 20, **dadurch gekennzeichnet, dass** die Fäden/Fasern der ersten Art innerhalb des Verstärkungsbands (13) ein Vlies bilden.

28. Tuch- oder Folienbahn nach Anspruch 25, **dadurch gekennzeichnet, dass** die Fäden/Fasern der zweiten Art Kunststofffasern sind.

29. Tuch- oder Folienbahn nach Anspruch 25, **dadurch gekennzeichnet, dass** die Fäden/Fasern der ersten Art mit den Fäden/Fasern der zweiten Art ein Gewebe bilden, wobei die Fäden/Fasern der ersten Art in Kettrichtung liegen.

30. Tuch- oder Folienbahn nach Anspruch 20 oder 25, **dadurch gekennzeichnet, dass** die Fäden/Fasern der ersten Art und, falls vorhanden, die Fäden/Fasern der zweiten Art auf einer Seite der Schmelzkleberschicht (24) vorhanden sind.

31. Tuch- oder Folienbahn nach Anspruch 20 oder 25, **dadurch gekennzeichnet, dass** die Fäden/Fasern der ersten Art und, falls vorhanden, die Fäden/Fasern der zweiten Art in der Schmelzkleberschicht (24) eingebettet sind.

32. Tuch- oder Folienbahn nach Anspruch 20, **dadurch gekennzeichnet, dass** die UV-Schutzschicht (25) von einer Schmelzkleberschicht gebildet ist, die eine höhere Schmelztemperatur als die Schmelzkleberschicht (24) auf der anderen Seite aufweist.

33. Tuch- oder Folienbahn nach Anspruch 20, **dadurch gekennzeichnet, dass** sie von wenigstens einer Stoffbahn (9,11) gebildet ist.

34. Tuch- oder Folienbahn nach Anspruch 33, **dadurch gekennzeichnet, dass** die Stoffbahn (9,11) auf lediglich einer Seite mit einer Beschichtung versehen ist.

35. Tuch- oder Folienbahn nach Anspruch 34, **dadurch gekennzeichnet, dass** die Beschichtung eine PTFE-Beschichtung ist.

36. Tuch- oder Folienbahn nach Anspruch 34, **dadurch gekennzeichnet, dass** das Verstärkungsband (13) auf jener Seite aufgebracht ist, die keine Beschichtung aufweist.

## Claims

1. Cloth or film sheet (5), in particular for shading arrangements (1) or advertising carriers,
with a first sheet section (9, 11), which has a straight abutment edge (14, 15),
with at least one second sheet section (9, 11), which has at least one straight abutment edge (14, 15) extending flush next to the abutment edge (14, 15) of the first sheet section (9, 11),
with at least one joining band (17), which is integrally joined to both sheet sections (9, 11) bridging the flush join (16),
wherein the joining band (17)
• contains at least a first type of threads/fibres, which are less elastic than the material of the sheet sections (9, 11),
• is provided with a UV protection layer (25) on one flat side and with a hot-melt adhesive layer (24) on the opposite side, and
• the threads/fibres of the first type are contained between the UV protection layer (25) and the hot-melt adhesive layer (24), or are partially embedded into one or the other or both of the layers (24, 25).

2. Cloth or film sheet according to claim 1, **characterised in that** the first type of threads/fibres are synthetic or mineral fibres.

3. Cloth or film sheet according to claim 1, **characterised in that** the first type of threads/fibres are glass fibres.

4. Cloth or film sheet according to claim 1, **characterised in that** the first type of threads/fibres lie only in the longitudinal direction of the flush join (16).

5. Cloth or film sheet according to claim 1, **characterised in that** the first type of threads/fibres form a woven fabric inside the joining band (17).

6. Cloth or film sheet according to claim 1, **characterised in that** the joining band (17) only contains the first type of threads/fibres.

7. Cloth or film sheet according to claim 1, **characterised in that** the joining band (17) additionally contains a second type of threads/fibres, which differ from the first type of threads/fibres with respect to mechanical properties, and that the threads/fibres of the second type are contained or embedded between the UV protection layer and the hot-melt adhesive layer.

8. Cloth or film sheet according to claim 7, **characterised in that** the threads/fibres of the second type differ from the threads/fibres of the first type with respect to breaking behaviour or flexing strength.

9. Cloth or film sheet according to claim 1, **characterised in that** the threads/fibres of the first type form a nonwoven inside the joining band (17).

10. Cloth or film sheet according to claim 7, **characterised in that** the threads/fibres of the second type are synthetic fibres.

11. Cloth or film sheet according to claim 7, **characterised in that** the threads/fibres of the first type form a woven fabric with the threads/fibres of the second type, wherein the threads/fibres (22) of the first type lie in warp direction.

12. Cloth or film sheet according to claim 1 or 7, **characterised in that** the threads/fibres of the first type and, if present, the threads/fibres of the second type are located on a side of the hot-melt adhesive layer (24).

13. Cloth or film sheet according to claim 1 or 7, **characterised in that** the threads/fibres of the first type and, if present, the threads/fibres of the second type are embedded in the hot-melt adhesive layer (24).

14. Cloth or film sheet according to claim 1, **characterised in that** the UV protection layer (25) is formed by a hot-melt adhesive layer, which has a higher melting temperature than the hot-melt adhesive layer (24) on the other side.

15. Cloth or film sheet according to claim 1, **characterised in that** at least one sheet section (9, 11) is a fabric or textile sheet.

16. Cloth or film sheet according to claim 15, **characterised in that** the fabric sheet is provided with a coating on only one side.

17. Cloth or film sheet according to claim 16, **characterised in that** the coating is a PTFE coating.

18. Cloth or film sheet according to claim 17, **characterised in that** the joining band (17) is applied to the side which has no coating.

19. Cloth or film sheet according to claim 18, **characterised in that** during use the side with the joining band (17) forms the underside or the side remote from the sun or a UV source.

20. Cloth or film sheet (5), in particular for shading arrangements (1) or advertising carriers, which is bordered laterally by free longitudinal edges,
with at least one reinforcing band (13), which runs along at least one longitudinal edge (29) and which is integrally joined to the cloth or film sheet (5),
wherein the reinforcing band (13)
• contains at least a first type of threads/fibres, which are less elastic than the material of the sheet sections (9, 11),
• is provided with a UV protection layer (25) on one flat side and with a hot-melt adhesive layer (24) on the opposite side, and
• the threads/fibres of the first type are contained between the UV protection layer (25) and the hot-melt adhesive layer (24), or are partially embedded into one or the other or both of the layers (24, 25).

21. Cloth or film sheet according to claim 20, **characterised in that** the first type of threads/fibres are synthetic or mineral fibres.

22. Cloth or film sheet according to claim 20, **characterised in that** the first type of threads/fibres are glass fibres.

23. Cloth or film sheet according to claim 20, **characterised in that** the first type of threads/fibres form a woven fabric inside the reinforcing band (13).

24. Cloth or film sheet according to claim 20, **characterised in that** the reinforcing band (13) only contains the first type of threads/fibres.

25. Cloth or film sheet according to claim 20, **characterised in that** the reinforcing band (13) additionally contains a second type of threads/fibres, which differ from the first type of threads/fibres with respect to mechanical properties, and that the threads/fibres of the second type are contained or embedded between the UV protection layer and the hot-melt adhesive layer.

26. Cloth or film sheet according to claim 25, **characterised in that** the threads/fibres of the second type differ from the threads/fibres of the first type with respect to breaking behaviour.

27. Cloth or film sheet according to claim 20, **characterised in that** the threads/fibres of the first type form a nonwoven inside the reinforcing band (13).

28. Cloth or film sheet according to claim 25, **characterised in that** the threads/fibres of the second type are synthetic fibres.

29. Cloth or film sheet according to claim 25, **characterised in that** the threads/fibres of the first type form a woven fabric with the threads/fibres of the second type, wherein the threads/fibres of the first type lie in warp direction.

30. Cloth or film sheet according to claim 20 or 25, **characterised in that** the threads/fibres of the first type and, if present, the threads/fibres of the second type are located on a side of the hot-melt adhesive layer (24).

31. Cloth or film sheet according to claim 20 or 25, **characterised in that** the threads/fibres of the first type and, if present, the threads/fibres of the second type are embedded in the hot-melt adhesive layer (24).

32. Cloth or film sheet according to claim 20, **characterised in that** the UV protection layer (25) is formed by a hot-melt adhesive layer, which has a higher melting temperature than the hot-melt adhesive layer (24) on the other side.

33. Cloth or film sheet according to claim 20, **characterised in that** it is formed by at least one fabric sheet (9, 11).

34. Cloth or film sheet according to claim 33, **characterised in that** the fabric sheet (9, 11) is provided with a coating on only one side.

35. Cloth or film sheet according to claim 34, **characterised in that** the coating is a PTFE coating.

36. Cloth or film sheet according to claim 34, **characterised in that** the reinforcing band (13) is applied to the side which has no coating.

## Revendications

1. Bande de toile ou de feuille (5), en particulier pour des dispositifs de protection solaire (1) ou des supports publicitaires,
comprenant une première bande partielle (9, 11) qui présente un bord de jonction (14, 15) rectiligne,
comprenant au moins une deuxième bande partielle (9, 11) qui présente au moins un bord de jonction (14, 15) rectiligne, lequel est mis bout à bout contre le bord de jonction (14, 15) de la première bande partielle (9, 11) et s'étend à côté de ce bord,
comprenant au moins une bande d'assemblage (17) qui recouvre la jonction (16) et est liée par matière aux deux bandes partielles (9, 11),
la bande d'assemblage (17)
- contenant au moins un premier type de fils/fibres qui sont moins extensibles que la matière des bandes partielles (9, 11),
- étant pourvue, sur une face plane, d'une couche de protection contre les rayons UV (25) et, sur la face opposée, d'une couche d'adhésif thermofusible (24), et
- les fils/fibres du premier type sont contenus entre la couche de protection contre les rayons UV (25) et la couche d'adhésif thermofusible (24) ou sont noyés pour partie dans l'une ou l'autre de ces deux couches (24, 25) ou dans les deux.

2. Bande de toile ou de feuille selon la revendication 1, **caractérisée par le fait que** le premier type de fils/fibres est constitué de fibres synthétiques ou de fibres minérales.

3. Bande de toile ou de feuille selon la revendication 1, **caractérisée par le fait que** le premier type de fils/fibres est constitué de fibres de verre.

4. Bande de toile ou de feuille selon la revendication 1, **caractérisée par le fait que** le premier type de fils/fibres s'étend uniquement dans le sens longitudinal de la jonction (16).

5. Bande de toile ou de feuille selon la revendication 1, **caractérisée par le fait que** le premier type de fils/fibres forme un tissu à l'intérieur de la bande d'assemblage (17).

6. Bande de toile ou de feuille selon la revendication 1, **caractérisée par le fait que** la bande d'assemblage (17) contient uniquement le premier type de fils/fibres.

7. Bande de toile ou de feuille selon la revendication 1, **caractérisée par le fait que** la bande d'assemblage (17) contient en plus un deuxième type de fils/fibres qui se distinguent du premier type de fils/fibres par leurs propriétés mécaniques, et **par le fait que** les fils/fibres du deuxième type sont disposés ou noyés entre la couche de protection contre les rayons UV et la couche d'adhésif thermofusible.

8. Bande de toile ou de feuille selon la revendication 7, **caractérisée par le fait que** les fils/fibres du deuxième type se distinguent des fils/fibres du premier type sur le plan du comportement de rupture ou de la résistance au pliage.

9. Bande de toile ou de feuille selon la revendication 1, **caractérisée par le fait que** les fils/fibres du premier type forment une structure non-tissée à l'intérieur de la bande d'assemblage (17).

10. Bande de toile ou de feuille selon la revendication 7, **caractérisée par le fait que** les fils/fibres du deuxième type sont des fibres synthétiques.

11. Bande de toile ou de feuille selon la revendication 7, **caractérisée par le fait que** les fils/fibres du premier type forment avec les fils/fibres du deuxième type un tissu dans lequel les fils/fibres (22) du premier type s'étendent dans le sens de la chaîne.

12. Bande de toile ou de feuille selon la revendication 1 ou 7, **caractérisée par le fait que** les fils/fibres du premier type et, s'ils existent, les fils/fibres du deuxième type sont prévus sur une face de la couche d'adhésif thermofusible (24).

13. Bande de toile ou de feuille selon la revendication 1 ou 7, **caractérisée par le fait que** les fils/fibres du premier type et, s'ils existent, les fils/fibres du deuxième type sont noyés dans la couche d'adhésif thermofusible (24).

14. Bande de toile ou de feuille selon la revendication 1, **caractérisée par le fait que** la couche de protection contre les rayons UV (25) est constituée d'une couche d'adhésif thermofusible qui présente une température de fusion plus élevée que la couche d'adhésif thermofusible (24) située sur l'autre face.

15. Bande de toile ou de feuille selon la revendication 1, **caractérisée par le fait qu'**au moins une bande partielle (9, 11) est une bande en tissu ou une bande textile.

16. Bande de toile ou de feuille selon la revendication 15, **caractérisée par le fait que** la bande de tissu est pourvue d'un enduit sur une seule face.

17. Bande de toile ou de feuille selon la revendication 16, **caractérisée par le fait que** l'enduit est un enduit PTFE.

18. Bande de toile ou de feuille selon la revendication 17, **caractérisée par le fait que** la bande d'assemblage (17) est appliquée sur la face qui ne comporte pas d'enduit.

19. Bande de toile ou de feuille selon la revendication 18, **caractérisée par le fait que** lors de l'utilisation, la face portant la bande d'assemblage (17) constitue la face inférieure ou la face qui est détournée du soleil ou d'une source de rayons UV.

20. Bande de toile ou de feuille (5), en particulier pour des dispositifs de protection solaire (1) ou des supports publicitaires, qui est délimitée sur les côtés par des bords longitudinaux libres,
comprenant au moins une bande de renfort (13) qui s'étend le long d'au moins un bord longitudinal (29) et est liée par matière à la bande de toile ou de feuille (5),
la bande de renfort (13)
- contenant au moins un premier type de fils/fibres qui sont moins extensibles que la matière des bandes partielles (9, 11),
- étant pourvue, sur une face plane, d'une couche de protection contre les rayons UV (25) et, sur la face opposée, d'une couche d'adhésif thermofusible (24), et
- les fils/fibres du premier type sont contenus entre la couche de protection contre les rayons UV (25) et la couche d'adhésif thermofusible (24) ou sont noyés pour partie dans l'une ou l'autre de ces deux couches (24, 25) ou dans les deux.

21. Bande de toile ou de feuille selon la revendication 20, **caractérisée par le fait que** le premier type de fils/fibres est constitué de fibres synthétiques ou de fibres minérales.

22. Bande de toile ou de feuille selon la revendication 20, **caractérisée par le fait que** le premier type de fils/fibres est constitué de fibres de verre.

23. Bande de toile ou de feuille selon la revendication 20, **caractérisée par** le fait le premier type de fils/fibres forme un tissu à l'intérieur de la bande de renfort (13).

24. Bande de toile ou de feuille selon la revendication 20, **caractérisée par le fait que** la bande de renfort (13) contient uniquement le premier type de fils/fibres.

25. Bande de toile ou de feuille selon la revendication 20, **caractérisée par le fait que** la bande de renfort (13) contient en plus un deuxième type de fils/fibres qui se distinguent du premier type de fils/fibres par leurs propriétés mécaniques, et **par le fait que** les fils/fibres du deuxième type sont disposés ou noyés entre la couche de protection contre les rayons UV et la couche d'adhésif thermofusible.

26. Bande de toile ou de feuille selon la revendication 25, **caractérisée par le fait que** les fils/fibres du deuxième type se distinguent des fils/fibres du premier type sur le plan du comportement de rupture.

27. Bande de toile ou de feuille selon la revendication 20, **caractérisée par le fait que** les fils/fibres du premier type forment une structure non-tissée à l'intérieur de la bande de renfort (13).

28. Bande de toile ou de feuille selon la revendication 25, **caractérisée par le fait que** les fils/fibres du deuxième type sont des fibres synthétiques.

29. Bande de toile ou de feuille selon la revendication 25, **caractérisée par le fait que** les fils/fibres du premier type forment avec les fils/fibres du deuxième type un tissu dans lequel les fils/fibres du premier type s'étendent dans le sens de la chaîne.

30. Bande de toile ou de feuille selon la revendication 20 ou 25, **caractérisée par le fait que** les fils/fibres du premier type et, s'ils existent, les fils/fibres du deuxième type sont prévus sur une face de la couche d'adhésif thermofusible (24).

31. Bande de toile ou de feuille selon la revendication 20 ou 25, **caractérisée par le fait que** les fils/fibres du premier type et, s'ils existent, les fils/fibres du deuxième type sont noyés dans la couche d'adhésif thermofusible (24).

32. Bande de toile ou de feuille selon la revendication 20, **caractérisée par le fait que** la couche de protection contre les rayons UV (25) est constituée d'une couche d'adhésif thermofusible qui présente une température de fusion plus élevée que la couche d'adhésif thermofusible (24) située sur l'autre face.

33. Bande de toile ou de feuille selon la revendication 20, **caractérisée par le fait qu'**elle est formée d'au moins une bande de tissu (9, 11).

34. Bande de toile ou de feuille selon la revendication 33, **caractérisée par le fait que** la bande de tissu (9, 11) est pourvue d'un enduit sur une seule face.

35. Bande de toile ou de feuille selon la revendication 34, **caractérisée par le fait que** l'enduit est un enduit PTFE.

36. Bande de toile ou de feuille selon la revendication 34, **caractérisée par le fait que** la bande de renfort (13) est appliquée sur la face qui ne comporte pas d'enduit.
